Europäisches Patentamt

European Patent Office

Office européen des brevets

(11) Veröffentlichungsnummer: **0 460 408 A1**

# EUROPÄISCHE PATENTANMELDUNG

(21) Anmeldenummer: 91107261.9

(22) Anmeldetag: 04.05.91

(51) Int. Cl.⁵: **B60T 8/48**

(30) Priorität: 02.06.90 DE 4017872

(43) Veröffentlichungstag der Anmeldung:
**11.12.91 Patentblatt 91/50**

(84) Benannte Vertragsstaaten:
**DE FR GB IT SE**

(71) Anmelder: **ROBERT BOSCH GmbH**
**Postfach 10 60 50**
**W-7000 Stuttgart 10(DE)**

(72) Erfinder: **Kollers, Michael, Dipl.-Ing.**
**Fuchsweg 3**
**W-7148 Remseck 2(DE)**
Erfinder: **Wolff, Günter, Dipl.-Ing. (FH)**
**Schulberg 20**
**W-7141 Schwieberdingen(DE)**
Erfinder: **Käs, Günter**
**Markelsheimer Strasse 70**
**W-7000 Stuttgart 40(DE)**

(54) **Hydraulische Fahrzeugbremsanlage mit Antiblockiersystem und Antriebsschlupfregelung.**

(57) Die Bremsanlage (10) hat eine Drucksteuerventilanordnung (31) mit einem Einlaßventil (25) in einer Bremsleitung (13, 23) zwischen einem Hauptbremszylinder (11) und einem Radbremszylinder (15). Die Bremsanlage (10) ist außerdem mit einer Vorladepumpe (54) und einer Rückförderpumpe (41) ausgestattet. In einer beide Pumpen verbindenden Speiseleitung (55) ist ein Ladeventil (56) angeordnet.

In Phasen des Bremsdruckhaltens und des Bremsdruckabbaus bei Antriebsschlupfregelung soll die Förderung von Bremsflüssigkeit durch die kontinuierlich betriebene Rückförderpumpe mit Vorladepumpe unterbleiben.

Bei Antrieb der Vorladepumpe (54) und der Rückförderpumpe (41) durch einen gemeinsamen Antriebsmotor (46) stellt das als 2/2-Wegeventil ausgebildete Ladeventil (56) sicher, daß bei Wirksamkeit des Antiblockiersystems ein Bremsflüssigkeitsaustausch zwischen der Vorladepumpe (54) und der Rückförderpumpe (41) unterbunden ist. Bei Wirksamkeit der Antriebsschlupfregelung gibt das Ventil (56) dagegen die Förderung von Bremsflüssigkeit von der Vorladepumpe (54) zur Rückförderpumpe (41) frei, jedoch nur dann, wenn die Drucksteuerventilanordnung (31) in Druckaufbau geschaltet ist.

FIG. 1

Stand der Technik

Die Erfindung geht aus von einer hydraulischen Fahrzeugbremsanlage mit Antiblockiersystem und Antriebsschlupfregelung nach der Gattung des Hauptanspruchs.

Es ist schon eine derartige Fahrzeugbremsanlage vorgeschlagen worden, bei welcher die Vorladepumpe und die Rückförderpumpe unabhängig voneinander angetrieben sind. Bei wirksamer Antriebsschlupfregelung fördert die als Niederdruckpumpe mit hohem Förderstrom ausgebildete Vorladepumpe Bremsflüssigkeit zum Eingang der Rückförderpumpe. Die Rückförderpumpe, welche Bremsflüssigkeit mit hohem Druck und gegenüber der Vorladepumpe geringerem Förderstrom zu fördern vermag, drückt bei Druckaufbau Bremsflüssigkeit in den Radbremszylinder des schlüpfenden Fahrzeugrades. Während der Wirksamkeit der Antriebsschlupfregelung wird jedoch Druckaufbau nur während einer relativ geringen Zeitspanne verlangt. Während der Phasen des Druckhaltens und Druckabbaus umfassenden Zeitdauer bei Antriebsschlupfregelung muß daher die von der Rückförderpumpe geförderte Bremsflüssigkeit z. B. über ein Druckbegrenzungsventil abgesteuert werden, was eine erhebliche Erwärmung der Bremsflüssigkeit bedeuten kann. Zur Reduzierung dieser Verlustleistung ist vorgeschlagen worden, den Antriebsmotor der Vorladepumpe im Anschluß an die Erstbefüllung des Radbremszylinders während der Antriebsschlupfregelung pulsweise anzusteuern, um somit den Förderstrom der Rückförderpumpe zu verringern. Wegen der hohen Einschaltstromstärke des Antriebsmotors ist diese Ansteuerung nur mit hohem Aufwand zu verwirklichen.

Vorteile der Erfindung

Die erfindungsgemäße hydraulische Fahrzeugbremsanlage mit den kennzeichnenden Merkmalen des Hauptanspruchs hat demgegenüber den Vorteil, daß sowohl der bauliche und schaltungstechnische Aufwand für die beiden Pumpen als auch die thermische Belastung der Bremsflüssigkeit verringert ist. Daneben ist in Zeiten des Druckhaltens und Druckabbaus bei der Antriebsschlupfregelung das Geräusch der Rückförderpumpe geringer, weil diese im Teilfüllungsbereich arbeitet. Darüber hinaus verhindert das Wegeventil bei Wirksamkeit des Antiblockiersystems ein Abfließen von Bremsflüssigkeit durch die Vorladepumpe zum Vorratsbehälter.

Durch die im Unteranspruch angegebene Ausgestaltung des Pumpenantriebs werden in vorteilhafter Weise Bauvolumen, elektrische und hydraulische Leitungen bzw. Schläuche sowie Halterungen für die Pumpen eingespart.

Zeichnung

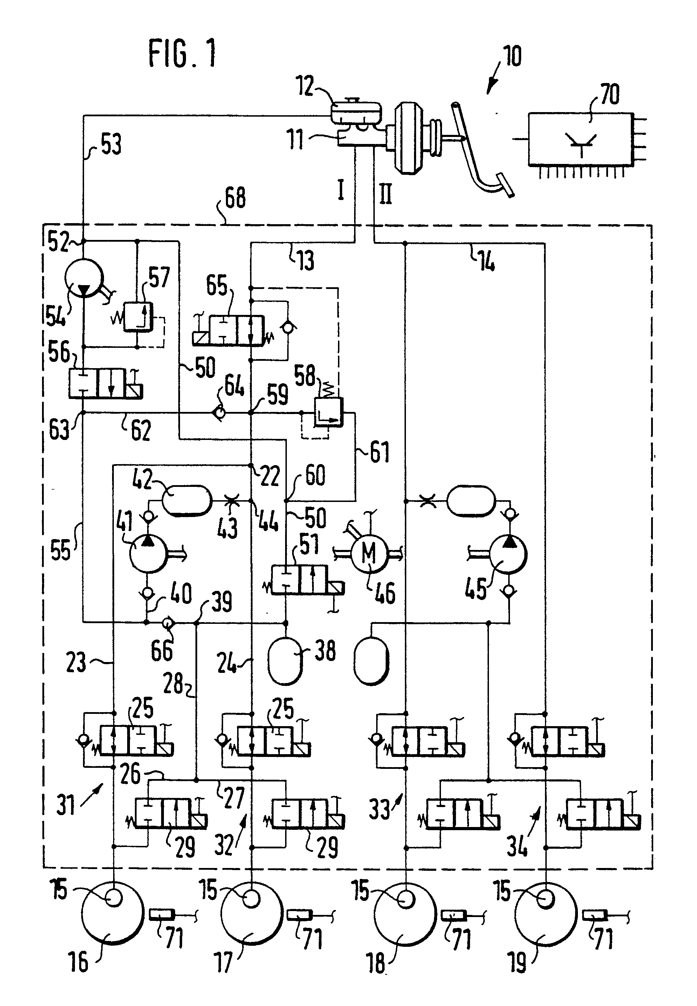

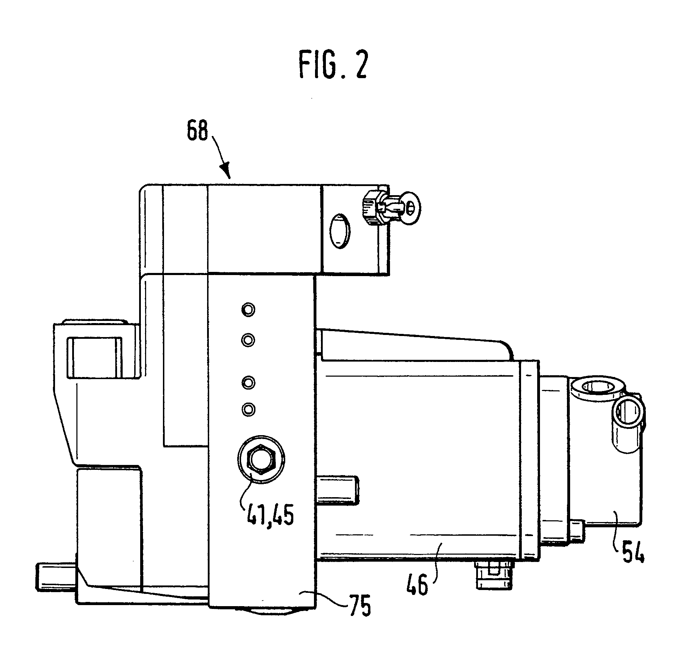

Ein Ausführungsbeispiel der Erfindung ist in der Zeichnung vereinfacht dargestellt und in der nachfolgenden Beschreibung näher erläutert. Es zeigen Figur 1 ein Schaltschema einer hydraulischen Fahrzeugbremsanlage mit einer Vorladepumpe sowie einer Rückförderpumpe und Figur 2 eine Ansicht eines Hydroaggregats mit gemeinsamem Antriebsmotor für die Vorladepumpe und die Rückförderpumpe.

Beschreibung des Ausfürungsbeispiels

Die in Figur 1 schematisch dargestellte hydraulische Fahrzeugbremsanlage 10 weist einen pedalbetätigbaren Hauptbremszylinder 11 mit einem Vorratsbehälter 12 für Bremsflüssigkeit auf. Vom Hauptbrems-Zylinder 11 gehen eine Bremsleitung 13 eines Bremskreises I und eine Bremsleitung 14 eines Bremskreises II aus. Dem Bremskreis I sind Radbremszylinder 15 von Fahrzeugrädern 16 und 17 einer angetriebenen, nicht dargestellten Fahrzeugachse zugeordnet. Der Bremskreis II umfaßt Radbremsen 15 von Fahrzeugrädern 18 und 19 einer nicht angetriebenen, ebenfalls nicht dargestellten Fahrzeugachse.

Die Bremsleitung 13 ist am Punkt 22 in zwei Leitungszweige 23 und 24 gegabelt. Der zum Radbremszylinder 15 des Fahrzeugrades 16 führende Leitungszweig weist ebenso wie der Leitungszweig 24 des Fahrzeugrades 17 ein Einlaßventil 25 in Form eines 2/2-Wegeventils auf, welches als federbetätigte Grundstellung in Durchlaßstellung geschaltet ist, während seine Sperrstellung als Arbeitsstellung elektromagnetisch erzeugbar ist. Zwischen dem Einlaßventil 25 und dem Radbremszylinder 15 jedes Bremsleitungszweiges 23 bzw. 24 geht von diesem der Zweig 26, 27 einer Rücklaufleitung 28 für Bremsflüssigkeit aus. In jedem Rücklaufleitungszweig 26, 27 sitzt ein Auslaßventil 29 in Form eines 2/2-Wegeventils. Dieses hat als Grundstellung eine federbetätigte Sperrstellung und als Arbeitsstellung eine elektromagnetisch schaltbare Durchlaßstellung. Die Einlaßventile 25 und die Auslaßventile 29 bilden je eine den Radbremszylindern 15 der Fahrzeugräder 16 und 17 der Antriebsachse zugeordnete Drucksteuerventilanordnung 31 und 32 für Druckaufbau, Druckhalten und Druckabbau im Radbremszylinder 15. In entsprechender Weise sind den Radbremszylindern 15 der Fahrzeugräder 18 und 19 der nicht angetriebenen Fahrzeugachse Drucksteuerventilanordnungen 33 und 34 zugeordnet.

An die Rücklaufleitung 28 ist eine Speicherkammer 38 zur Aufnahme von Bremsflüssigkeit angeschlossen. Vom Punkt 39 der Rücklaufleitung 28 geht eine Leitung 40 aus, in der eine Rückförderpumpe 41, eine Dämpferkammer 42 und eine Drossel 43 angeordnet sind. Die Pumpleitung 40 mündet im Punkt 44 in der Bremsleitung 13. Die Rückförderpumpe 41 ist, ebenso wie eine im gleich ausgestatteten Bremskreis II angeordnete Rückförderpumpe 45 mit einem gemeinsamen elektrischen Antriebsmotor 46 antreibbar.

Die Rücklaufleitung 28 ist vom Punkt 39 in einen Leitungsabschnitt 50 mit einem Rücklaufventil 51 in Form eines 2/2-Wegeventils fortgesetzt. Dieses Ventil hat als Grundstellung eine federbetätigte Sperrstellung und ist elektromagnetisch in eine Durchlaßstellung als Arbeitsstellung schaltbar. Der Leitungsabschnitt 50 mündet am Punkt 52 in eine Saugleitung 53, die in Verbindung mit dem Vorratsbehälter 12 für Bremsflüssigkeit steht. An die Saugleitung 53 ist eine ebenfalls durch den Antriebsmotor 46 antreibbare Vorladepumpe 54 angeschlossen. Diese vermag Bremsflüssigkeit aus dem Vorratsbehälter 12 anzusaugen und mit niedrigem Druck aber relativ großem Förderstrom zu fördern. Dagegen sind die Rückförderpumpen 41 und 45 zur Förderung eines relativ kleinen Förderstromes mit hohem Druck ausgelegt. Vom Ausgang der Vorladepumpe 54 geht eine zum Eingang der Rückförderpumpe 41 führende Speiseleitung 55 aus. In dieser ist ein Ladeventil 56 in Form eines 2/2-Wegeventils mit federbetätigter Sperrstellung als Grundstellung und elektromagnetisch schaltbarer Durchlaßstellung als Arbeitsstellung angeordnet ist. Parallel zur Vorladepumpe 54 ist ein Druckbegrenzungsventil 57 geschaltet. Ebenso ist ein der Rückförderpumpe 41 zugeordnetes Druckbegrenzungsventil 58 vorgesehen, welches in einer von der Bremsleitung 13 am Punkt 59 ausgehenden und im Punkt 60 in den Leitungsabschnitt 50 mündenden Leitung 61 sitzt. Von der Bremsleitung 13 geht im Punkt 59 eine Leitung 62 aus, welche im Punkt 63 an die Speiseleitung 55 angeschlossen ist. In der Leitung 62 liegt ein Rückschlagventil 64 mit von der Bremsleitung 13 zur Speiseleitung 55 gerichteter Sperrwirkung. Zwischen dem Punkt 59 und dem Hauptbremszylinder 11 ist ferner in der Bremsleitung 13 ein Absperrventil 65 in Form eines 2/2-Wegeventils angeordnet. Dieses ist in seiner federbetätigten Grundstellung durchlässig, in seiner elektromagnetisch schaltbaren Arbeitsstellung unterbricht es die Bremsleitung 13. Schließlich befindet sich zwischen dem Eingang der Rückförderpumpe 41 und dem Punkt 39 der Rücklaufleitung 28 ein Rückschlagventil 66 mit Sperrwirkung gegen Punkt 39.

Die vorstehend beschriebenen Elemente und Baugruppen der Fahrzeugbremsanlage 10 sind in einem sogenannten Hydroaggregat 68 zusammengefaßt, was im Schaltschema nach Figur 1 durch eine gestrichelt gezeichnete Umrandung dargestellt ist.

Die Fahrzeugbremsanlage 10 besitzt ein elektronisches Steuergerät 70, welches mit Hilfe von den Fahrzeugrädern 16 bis 19 zugeordneten Drehzahlsensoren 71 das Raddrehverhalten überwacht und in Abhängigkeit von deren Verhalten die Ventile 25, 29, 51, 56, 65 und den Antriebsmotor 46 der Pumpen 41, 45, 54 nach einem vorgegebenen Regelalgorithmus schaltet.

Die Fahrzeugbremsanlage 10 hat folgende Wirkungsweise:

Im normalen Fahrbetrieb des Fahrzeugs nehmen die Ventile 25, 29, 51, 56, 65 der Bremsanlage 10 ihre gezeichnete Grundstellung ein und die Pumpen 41, 45, 54 sind antriebslos. Bei einer vom Fahrer gewünschten Bremsung wird Bremsdruck im Hauptbremszylinder 11 erzeugt und durch Verschiebung von Bremsflüssigkeits-Teilmengen in den Bremsleitungen 13, 14 sowie den Leitungszweigen 23, 24 in die Radbremszylinder 15 sämtlicher Fahrzeugräder 16 bis 19 übertragen. Gerät während einer solchen Bremsung z. B. das Fahrzeugrad 16 in einen instabilen Betriebszustand, d. h. es droht zu blockieren, so setzt das Steuergerät 70 aufgrund der Signale des diesem Rad 16 zugeordneten Drehzahlsensors 71 das Antiblockiersystem der Fahrzeugbremsanlage 10 in Funktion. Das Steuergerät 70 schaltet das Einlaßventil 25 der Drucksteuerventilanordnung 31 in seine Sperrstellung, um weiteren Druckanstieg im Radbremszylinder 15 des Fahrzeugrades 16 zu verhindern. Außerdem schaltet das Steuergerät 70 das Auslaßventil 29 der Drucksteuerventilanordnung 31 in seine Durchlaßstellung, damit sich Bremsdruck im Radbremszylinder 15 abbauen und das Fahrzeugrad 16 stabilisieren kann. Die aus dem Radbremszylinder 15 durch den Leitungszweig 26 der Rücklaufleitung 28 abfließende Bremsflüssigkeit wird von der Speicherkammer 38 aufgenommen. Mit Wirksamwerden des Antiblockiersystems ist der elektrische Antriebsmotor 46 der Pumpen 41, 45, 54 vom Steuergerät 70 in Betrieb gesetzt worden. Die während der Phase des Druckabbaus im Radbremszylinder 15 des Fahrzeugrades 16 entnommene Bremsflüssigkeit wird daher von der Rückförderpumpe 41 in die Bremsleitung 13 zurück zum Hauptbremszylinder 11 gefördert. In der sich an die Phase des Druckabbaus im Radbremszylinder 15 anschließenden Phase Druckhalten wird das Auslaßventil 29 der Drucksteuerventilanordnung 31 in seine Sperrstellung geschaltet. Sobald sich das Fahrzeugrad 16 stabilisiert hat, setzt eine Phase des Druckaufbaus im Radbremszylinder 15 ein. Hierzu wird das Einlaßventil 25 der Drucksteuerventilanordnung 31 in seine Durchlaßstellung geschaltet, so daß vom Hauptbremszylinder 11 her der Bremsdruck im Radbremszylinder 15 des Fahrzeugrades 16 gesteigert werden kann. Bei stabilem Raddrehverhalten aller Fahrzeugräder 16 bis 19 schaltet das Steuergerät 70 das Antiblockiersystem ab.

Gerät dagegen beim Anfahren oder Beschleunigen des Fahrzeugs z. B. das Rad 16 der Antriebsachse in einen instabilen Betriebszustand, d. h. das Fahrzeugrad 16 unterliegt einem unzulässig großem Schlupf, so schaltet das Steuergerät 70 die Antriebsschlupfregelung ein. Hierzu schaltet das Steuergerät 70 das Absperrventil 65 in seine Sperrstellung und das Rücklaufventil 51 in seine Durchlaßstellung. Außerdem schaltet das Steuergerät den Antriebsmotor 46 ein. Die Vorladepumpe 54 entnimmt nun aus dem Vorratsbehälter 12 des Hauptbremszylinders 10 Bremsflüssigkeit und fördert diese durch die Leitung 62 unter Überwindung des Rückschlagventils 64 in die Bremsleitung 13, so daß bei seine Durchlaßstellung einnehmendem Einlaßventil 25 der Steuerventilanordnung 31 Bremsdruck im Radbremszylinder 15 des Fahrzeugrades 16 in sehr kurzer Zeit aufgebaut und die Bremszangen schnell zum fliegen gebracht werden. Gleichzeitig fördert die Vorladepumpe 54 Bremsflüssigkeit durch die Speiseleitung 55 zum Eingang der Rückförderpumpe 41. Die Rückförderpumpe 41 verdrängt Bremsflüssigkeit unter höherem Druck aber mit geringerem Förderstrom als die Vorladepumpe 54 in den Bremsleitungszweig 23 und bewirkt einen weiteren Druckanstieg im Radbremszylinder 15 des Fahrzeugrades 16. Sobald bei beginnender Antriebsschlupfregelung der Druck der Rückförderpumpe 41 den Druck der Vorladepumpe 54 übersteigt, schließt das Rückschlagventil 64 in der Leitung 62 und der weitere Bremsdruckaufbau im Radbremszylinder 15 wird durch die Rückförderpumpe 41 bestimmt.

In einer an die Phase des Bremsdruckaufbaus anschließenden Phase des Druckhaltens werden das Einlaßventil 25 und das Ladeventil 56 in ihre Sperrstellung geschaltet, während die Pumpen 41 und 54 in Betrieb bleiben. Von der Vorladepumpe 54 geförderte Bremsflüssigkeit wird daher über das parallelgeschaltete Druckbegrenzungsventil 57 abgesteuert. Aufgrund des seine Sperrstellung einnehmenden Ladeventils 56 wird der Rückförderpumpe 41 in der Phase des Druckhaltens keine Bremsflüssigkeit angeboten, so daß die Pumpe im Teilfüllungsbereich arbeitet, d. h. keine Bremsflüssigkeit fördert und eine erwünscht geringe Geräuschemission hat.

An die Phase des Druckhaltens können sich weitere Phasen des Druckaufbaus und des Druckhaltens anschließen. Erfordert die Antriebsschlupfregelung einen Druckabbau im Radbremszylinder 15 des Fahrzeugrades 16, so schaltet das Steuergerät 70 das Auslaßventil 29 der Drucksteuerventilanordnung 31 in seine Durchlaßstellung, während das Einlaßventil 25 seine Sperrstellung einnimmt. Bremsflüssigkeit kann aus dem Radbremszylinder 15 durch den Leitungszweig 26 der Rücklaufleitung 28 bei seine Durchlaßstellung einnehmendem Rücklaufventil 51 durch die Leitung 50 zur Leitung 53 und weiter in den Vorratsbehälter 12 des Hauptbremszylinders 11 abfließen. Der Druckabbau im Radbremszylinder 15 kann durch Überführen des Auslaßventils 29 in seine Sperrstellung begrenzt werden oder es kann bei Abschluß der Antriebsschlupfregelung der Druck im Radbremszylinder 15 des Fahrzeugrades 16 völlig abgebaut werden. Bei Beendigung der Antriebsschlupfregelung am Radbremszylinder 15 des Fahrzeugrades 16 schaltet das Steuergerät 70 den Antriebsmotor 46 der Pumpen 41 und 54 ab und überführt das Rücklaufventil 51 und das Auslaßventil 29 der Steuerventilanordnung 31 in deren Sperrstellung, während das Absperrventil 65, und das Einlaßventil 25 der Drucksteuerventilanordnung 31 in ihre Durchlaßstellung geschaltet werden.

Während der Antriebsschlupfregelung beträgt der Anteil der Druckaufbauphasen an der Gesamtdauer aller Phasen für Druckaufbau, Druckhalten und Druckabbau im Radbremszylinder lediglich 10 bis 20 %. Wie erwähnt, wird durch Schalten des Ladeventils 56 in seine Durchlaßstellung während dieses kleinen Zeitdaueranteils die Rückförderpumpe 41 von der Vorladepumpe 54 mit Bremsflüssigkeit versorgt, so daß die Rückförderpumpe Bremsflüssigkeit unter hohem Druck in den Radbremszylinder 15 fördern kann. Dabei ist von wesentlicher Bedeutung, daß das Ladeventil 56 nur dann in seine Durchlaßstellung schaltbar ist, wenn die Drucksteuerventilanordnung des schlüpfenden Rades Druckaufbau verlangt, d. h. das entsprechende Einlaßventil 25 seine Durchlaßstellung einnimmt. Während dieser Zeitspanne des Druckaufbaus arbeitet die Rückförderpumpe 41 im Vollfüllungsbereich, dagegen während der Phasen des Druckhaltens und Druckabbaus nur im Teilfüllungsbereich mit entsprechender Geräuschminderung. Durch diese Betriebsweise der Rückförderpumpe 41 bei Antriebsschlupfregelung wird nicht nur eine geringe thermische Belastung der Bremsflüssigkeit, sondern auch ein im Durchschnitt sehr viel geringerer Bremsflüssigkeits-Förderstrom in den Radbremszylinder 15 erzielt gegenüber dem sehr viel höheren Förderstrom der Rückförderpumpe 41 bei wirksamem Antiblockiersystem, wo ein schneller Bremsdruckabbau im Radbremszylinder 15 verlangt ist. Ein geringer Förderstrom ist bei Antriebsschlupfregelung erwünscht, um nach dem Anlegen der Bremszangen den Bremsdruck im Radbremszylinder feinfühlig regeln zu können. Während der Phasen des Druckhaltens und des Druckabbaus bei Antriebsschlupfregelung, in welchen das Ladeventil 56 seine Sperrstellung einnimmt und daher die Rückförderpumpe 41 keine Bremsflüssigkeit erhält, wird die von der Vorladepumpe 54 geförderte Bremsflüssigkeit über das Druckbegrenzungsventil 57 abgesteuert, was wegen des niedrigen Förderdruckes der Vorladepumpe 54 mit einer zulässigen Erwärmung der Bremsflüssigkeit verbunden ist. Schließlich stellt auch das bei Wirksamkeit des Antiblockiersystems in seiner Sperrstellung befindliche Ladeventil 56 sicher, daß beim Druckabbau keine Bremsflüssigkeit durch die Speiseleitung 55 und durch die Vorladepumpe 54 sowie die Saugleitung 53 zum Vorratsbehälter 12 des Hauptbremszylinders 11 abfließen kann.

Anhand der in Figur 2 dargestellten Ausgestaltung des Hydroaggregats 68 ist erkennbar, daß dieses ein Gehäuse 75 besitzt, in dem die beiden Rückförderpumpen 41 und 45 angeordnet sowie Ventile, weitere Bauelemente und Leitungen der Bremsanlage aufgenommen sind. An das Gehäuse 75 des Hydroaggregats 68 ist der elektrische Antriebsmotor 46 angebaut, an dessen freie Stirnseite die Vorladepumpe 54 angeflanscht ist. Der Antriebsmotor 46 treibt also die Rückförderpumpen 41 und 45 sowie die Vorladepumpe 54 gemeinsam an.

**Patentansprüche**

1. Hydraulische Fahrzeugbremsanlage (10) mit Antiblockiersystem und Antriebsschlupfregelung,
   mit einem Bremsdruck erzeugenden Hauptbremszylinder (11), von dem eine Bremsleitung (13, 23) zu wenigstens einem Radbremszylinder (15) führt,
   mit einer an die Bremsleitung (13, 23) angeschlossenen Drucksteuerventilanordnung (31) für Druckaufbau, Druckhalten und Druckabbau im Radbremszylinder (15),
   mit einer von einem elektrischen Antriebsmotor (46) angetriebenen Rückförderpumpe (41) zum Fördern von Bremsflüssigkeit aus dem Radbremszylinder (15) bei Wirksamkeit des Antiblockiersystems und zum Fordern von Bremsflüssigkeit in den Radbremszylinder (15) bei wirksamer Antriebsschlupfregelung,
   mit einer Vorladepumpe (54) zum Entnehmen von Bremsflüssigkeit aus einem Vorratsbehälter (12) und Fördern zum Eingang der Rückförderpumpe (41) bei wirksamer Antriebsschlupfregelung,
   sowie mit einem Ventil (56) in einer den Ausgang der Vorladepumpe (54) mit dem Eingang der Rückförderpumpe (41) verbindenden Leitung (55),
   gekennzeichnet durch die Merkmale:
   die Rückförderpumpe (41) und die Vorladepumpe (54) haben einen gemeinsamen Antriebsmotor (46) und werden gleichzeitig angetrieben; das Ventil (56) ist als 2/2-Wegeventil ausgebildet, welches bei Wirksamkeit des Antiblockiersystems einen Bremsflüssigkeitsaustausch zwischen der Vorladepumpe (54) und der Rückförderpumpe (41) unterbindet, bei Wirksamkeit der Antriebsschlupfregelung die Förderung von Bremsflüssigkeit von der Vorladepumpe (54) zur Rückförderpumpe (41) aber freigibt, wenn die Drucksteuerventilanordnung (31) in Druckaufbau geschaltet ist.

2. Fahrzeugbremsanlage nach Anspruch 1, dadurch gekennzeichnet, daß die Vorladepumpe (54) an den Antriebsmotor (46) der Rückförderpumpe (41) angeflanscht ist.

# FIG. 1

FIG. 2

68

41,45

75

46

54

**Europäisches Patentamt**

# EUROPÄISCHER RECHERCHENBERICHT

Nummer der Anmeldung

**EP 91 10 7261**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-3 900 852 (DAIMLER-BENZ)<br>* Spalte 12, Zeile 28 - Spalte 20, Zeile 53 * * Spalte 25, Zeile 28 - Spalte 26, Zeile 53; Figuren 1-3 *<br>- - - | 1 | B 60 T 8/48 |
| A | DE-C-3 900 850 (DAIMLER-BENZ)<br>* Spalte 3, Zeile 60 - Spalte 17, Zeile 21; Figuren 1, 2 *<br>- - - | 1 | |
| A | EP-A-0 324 103 (ROBERT BOSCH)<br>* Spalte 4, Zeile 8 - Spalte 6, Zeile 15; Figur 2 *<br>- - - | 1 | |
| A | GB-A-2 218 480 (ROBERT BOSCH)<br>* Seite 12, Zeile 11 - Seite 13, Zeile 11 * * Seite 13, Zeile 23 - Seite 14, Zeile 15 * * Seite 16, Zeile 7 - Seite 18, Zeile 8 * * Seite 19, Zeilen 1 - 19 * * Seite 23, Zeile 9 - Seite 24, Zeile 6 * * Seite 24, Zeile 18 - Seite 25, Zeile 18; Figuren 4, 6 *<br>- - - | 1 | |
| A | US-A-4 568 131 (BLOMBERG ET AL.)<br>* Spalte 7, Zeile 25 - Spalte 8, Zeile 12; Figuren 1, 2, 8, 10 *<br>- - - - - | 2 | |

**RECHERCHIERTE SACHGEBIETE (Int. Cl.5)**

B 60 T
F 04 B

**Der vorliegende Recherchenbericht wurde für alle Patentansprüche erstellt**

| Recherchenort | Abschlußdatum der Recherche | Prüfer |
|---|---|---|
| Den Haag | 28 August 91 | MEIJS P.C.J. |